# DEMANDE DE BREVET EUROPEEN

(11) **EP 1 582 849 A1**
(43) Date de publication de la demande: **05.10.2005**
(21) Numéro de dépôt: 04007933.7
(22) Date de dépôt: 01.04.2004
(51) Int. Cl.: G01G 19/44, G01G 3/10

(54) **Capteur et appareil de pesage muni de tels capteur**

(71) Demandeur: S.C.A.I.M.E. S.A., 74105 Annemasse (FR)
(72) Inventeur: Aumard, Jean-Pierre, 74100 Etrembières (FR)
(74) Mandataire: KIRKER & Cie S.A.

(57) **Abrégé**

Le capteur pour appareil de pesage comporte un corps d'épreuve (7) dont la partie centrale constitue une poutre de mesure déformable en torsion. Il comporte encore un organe d'appui supérieur (8) et un organe d'appui inférieur (9) en contact directement ou indirectement chacun avec le corps d'épreuve en deux points disposés suivant une diagonale dudit corps d'épreuve. L'organe d'appui supérieur (8) est destiné à être fixé sous le plateau (1) de l'appareil de pesage et l'organe d'appui inférieur (9) est destiné à reposer sur une surface ou sur le sol.

## Description

La présente invention a pour objet un capteur de mesure pour un appareil de pesage et notamment pour des pèse-personnes ainsi qu'un appareil de pesage muni de tels capteurs. Pour une telle application il est important de pouvoir disposer d'un capteur fiable et bon marché.

Généralement ces appareils de pesage comportent des capteurs de mesure comportant un corps d'épreuve, constituant un parallélogramme déformable ou une lame de flexion, muni de jauges de contrainte dans ses zones charnières.

Il existe des jauges de contrainte très bon marché et pouvant être produites en grande série qui consistent en un substrat en verre fin sur lequel on a déposé des zones métallisées formant les résistances de valeur variable en fonction de la déformation du substrat.

La présente invention a pour objet un capteur pour appareil de pesage et un appareil de pesage, notamment un pèse-personne, équipé de tels capteurs qui se distinguent par les caractéristiques énumérées aux revendications 1 et 6.

Le dessin annexé illustre schématiquement et à titre d'exemple une forme d'exécution du capteur selon l'invention et son utilisation sur un appareil de pesage.
La figure 1 illustre un schéma d'un appareil de pesage vu de dessus illustrant le positionnement des capteurs.

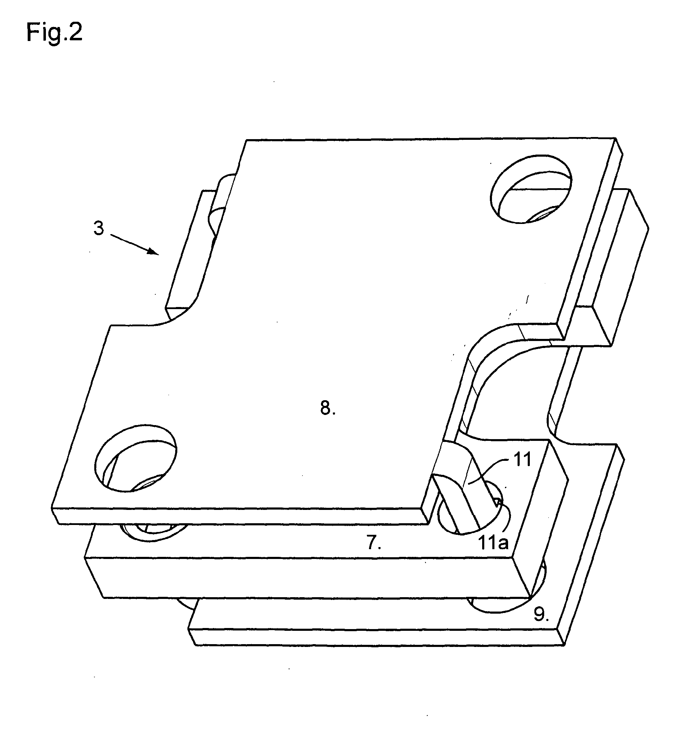

La figure 2 est une vue en perspective d'un capteur selon l'invention.

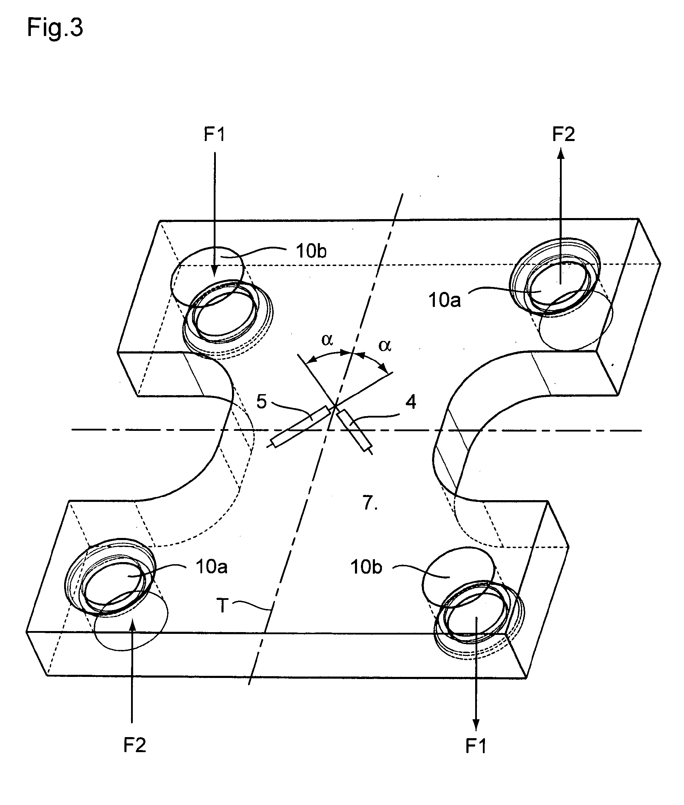

La figure 3 illustre le corps d'épreuve d'un capteur selon l'invention.
La figure 4 illustre une variante du capteur selon l'invention.
La figure 5 illustre le schéma d'un pont de mesure formé des résistances des jauges de contrainte de l'appareil de mesure.

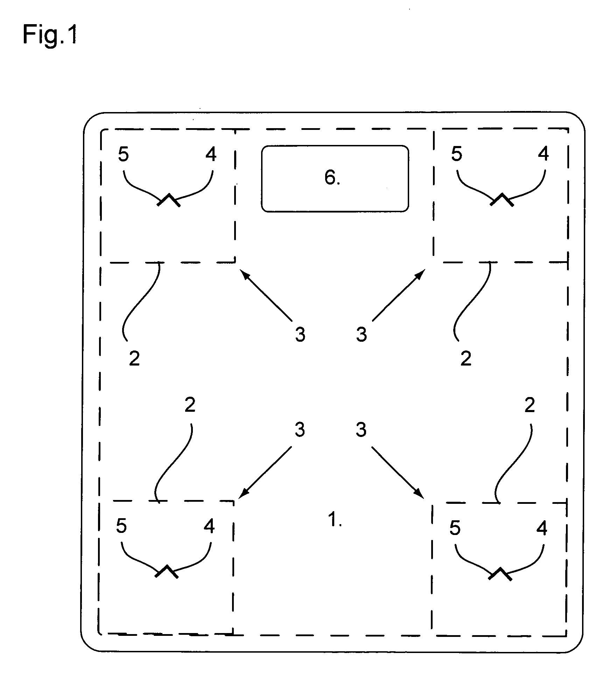

La figure 1 du dessin annexé illustre schématiquement un appareil de pesage, ici un pèse-personne, équipé de quatre capteurs selon l'invention. Ce pèse-personne se compose d'un plateau 1 muni sur sa surface inférieure de quatre pieds 2, chacun de ces pieds comportant un capteur 3 muni d'au moins une mais, de préférence, deux ou quatre résistances variables 4,5 disposées orthogonalement sur un substrat fixé au corps d'épreuve 3 du capteur.

Dans l'exemple illustré, les capteurs 3 sont orientés parallèlement au plateau 1 mais dans d'autres réalisations ils peuvent être orientés différemment. De préférence, ces capteurs sont orientés suivant des directions orthogonales ou parallèles entre eux.

Le plateau 1 est muni sur sa face supérieure d'un affichage 6, par exemple à cristaux liquides, relié aux jauges de contrainte 4,5 du corps d'épreuve 3 par des conducteurs. Chaque capteur 3 est incorporé dans, ou constitue un pied 2 de l'appareil de pesage et comporte un corps d'épreuve 7 disposé entre deux plaques d'appui supérieure 8 et inférieure 9. La plaque d'appui supérieure 8 est fixée sous le plateau 1 du pèse-personne et la plaque d'appui inférieure 9 repose sur le sol soit directement soit par l'intermédiaire d'un pied 2 ou d'un enjoliveur.

Dans la forme d'exécution illustrée chaque corps d'épreuve présente la forme générale d'un H dont la partie centrale constitue une poutre de mesure travaillant en torsion.

Chaque extrémité des branches du corps d'épreuve en H comporte un passage traversant 10a, 10b. Ces passages traversants 10a, 10b comportent chacun un épaulement formé soit par matage du matériau du corps d'épreuve soit par un passage à deux diamètres de valeurs différentes.

Les épaulements des passages traversants 10a sont dirigés vers la face inférieure du corps d'épreuve 7 tandis que les épaulements des passages traversants 10b sont dirigés vers la face supérieure du corps d'épreuve 7.

Sur une face de la poutre formée par la partie centrale du corps d'épreuve sont fixées une, deux ou quatre jauges de contrainte constituées de résistances variables 4,5 disposées orthogonalement entre elles et situées suivant des directions formant un angle α de 45° par rapport à l'axe de torsion T du corps d'épreuve 7. Ainsi lorsque le corps d'épreuve 7 est soumis à une contrainte de torsion, les forces F1, F2 étant exercées sur deux de ses extrémités diagonalement opposées 10b par dessus et par dessous sur ses deux autres extrémités diagonalement opposées 10a, l'une des résistances 4 diminue de valeur tandis que l'autre 5 augmente de valeur.

Les plaques supérieure 8 et inférieure 9 du capteur sont identiques et comportent chacune deux pieds ou pattes 11 dont l'extrémité 11a présente des dimensions correspondant à la partie de faible diamètre des passages traversants 10a, 10b du corps d'épreuve 7.

Les pattes 11 des plaques 8 et 9 sont introduites dans les passages 10a et 10b respectivement. Ainsi lorsque ces plaques, dont l'une est fixée au plateau du pèse-personne et l'autre est en appui sur le sol, sont soumises à une force tendant à les rapprocher l'une de l'autre, due à un poids sur le plateau 1, elles transmettent un effort de torsion à la poutre du corps d'épreuve 7 modifiant la valeur des résistances 4,5 du fait de leur allongement respectivement contraction.

Les pattes 11, 11 a peuvent être serties dans les passages 10a, 10b ou être posées librement sur les épaulements de ces passages.

Dans ce dernier cas des ressorts ou autres organes de maintien reliant les deux plaques 8,9 les maintiennent en position assemblée au corps d'épreuve 7.

Ce qui importe c'est que chaque plaque 8,9 soit en contact avec le corps d'épreuve en deux points avec chaque côté du corps d'épreuve situé sur une diagonale de celui-ci pour permettre de transmettre à ce corps d'épreuve une contrainte de torsion dans sa partie centrale formant la poutre de mesure.

Dans des variantes les plaques d'appui 8,9 pourraient être carrées ou rectangulaires et le corps d'épreuve 7 pourrait compter deux goupilles ou saillies sur ses faces supérieure et inférieure disposées suivant des diagonales de ce corps d'épreuve et destinées à entrer en contact avec les plaques d'appui 8,9.

Ce mode d'appui des plaques 8,9 sur chaque face du corps d'épreuve 7 permet par un effet de cardan que les plaques ne soient pas rigoureusement parallèles entre elles sans pour autant altérer ou modifier l'effort de torsion transmis au corps d'épreuve 7 et donc sans influencer la mesure.

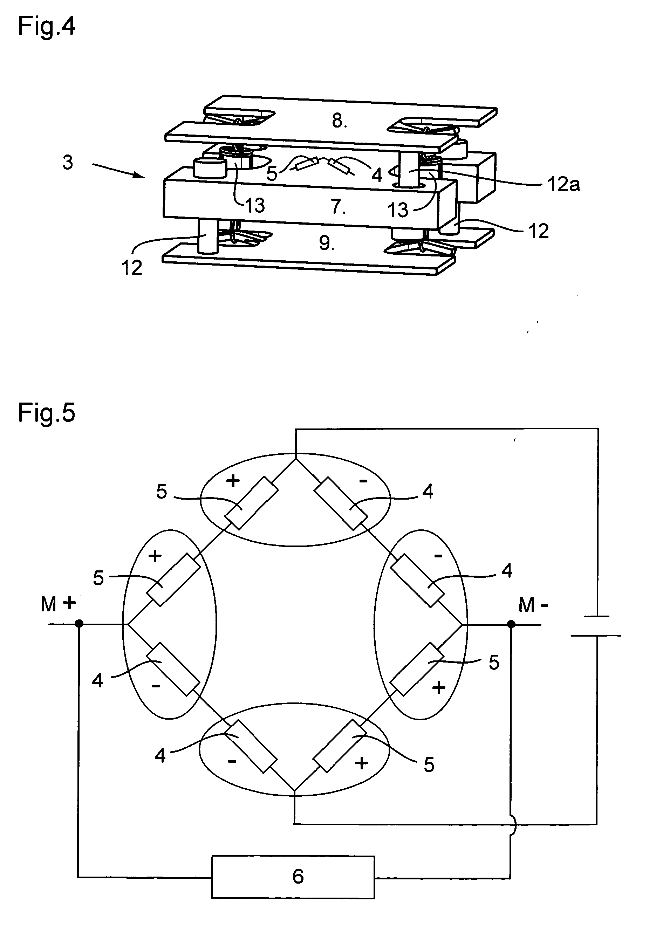

La variante illustrée à la figure 4 comporte un corps d'épreuve 7 muni de goupilles 12, 12a serties ou soudées saillant sur l'une et l'autre faces du corps d'épreuve 7 suivant une diagonale. Les plaques d'appui 8,9 sont maintenues à l'aide du ressort 13 en appui chacune sur deux de ces goupilles 12, 12a pour former le capteur 3.

Il est évident qu'un cache ou enjoliveur, non illustré, peut entourer chaque capteur pour autant que les plaques 8,9 soient libres de se déplacer l'une par rapport à l'autre sous l'effet d'un poids placé sur le plateau 1. Par ailleurs les plaques 8,9 pourraient être remplacées par n'importe quelle forme d'organe d'appui, cubique, semi-sphérique, etc.; il n'est pas nécessaire que ces organes soient plats.

Les caractéristiques importantes de ce capteur sont que le corps d'épreuve 7 comporte une poutre travaillant en torsion et non en flexion comme c'est habituellement le cas et que les plaques d'appui 8,9 sont libres de se déplacer l'une par rapport à l'autre sans pour autant rester dans des plans strictement parallèles entre eux et par rapport au plan du corps d'épreuve 7.

Ceci est important pour un pèse-personne, notamment car le sol sur lequel il est posé n'est souvent pas rigoureusement plan, ainsi les plaques d'appui inférieure 9 des quatre pieds 2 peuvent épouser les irrégularités du sol sans pour autant influencer la précision de la mesure.

Les résistances 4,5 des jauges de contrainte de chaque pied 2 sont montées en pont de Wheatstone comme illustré à la figure 5. A la sortie du pont complet on obtient un signal de sortie M dont la valeur est proportionnelle au poids placé sur le plateau 1 de l'appareil de pesage. Ce signal de mesure M est traité et sert à commander l'affichage 6. Dans des variantes, l'affichage peut être différent et placé différemment, il peut être séparé de l'appareil de pesage proprement dit, plateau 1 et pieds 2, pour être placé sur un mur ou dans un local de contrôle.

Dans une variante l'appareil pourrait ne comporter que trois pieds assurant sa stabilité même sur un sol inégal. Dans ce cas chaque pied comporterait un ensemble de quatre jauges de contrainte assemblées en pont de Wheatstone.

Outre le fait que les capteurs 3 permettent aux plaques 8,9 de ne pas travailler dans des plans strictement parallèles sans influencer sur la précision de la mesure, ces capteurs sont particulièrement avantageux car le nombre de pièces les constituant est réduit voire minimum, ces pièces étant de forme simple et facile à réaliser en grande série et à bon marché. De plus, ces capteurs sont particulièrement robustes de par leur construction.

## Revendications

1. Capteur pour appareil de pesage, notamment pour pèse-personne, **caractérisé par le fait qu'**il comporte un corps d'épreuve (7) dont la partie centrale constitue une poutre de mesure déformable en torsion; **par le fait qu'**il comporte encore un organe d'appui supérieur (8) et un organe d'appui inférieur (9) en contact directement ou indirectement chacun avec le corps d'épreuve en deux points disposés suivant une diagonale dudit corps d'épreuve, l'organe d'appui supérieur (8) étant destiné à être fixé sous le plateau (1) de l'appareil de pesage et l'organe d'appui inférieur (9) étant destiné à reposer sur une surface ou sur le sol.

2. Capteur selon la revendication 1, **caractérisé par le fait que** les organes d'appui supérieurs et inférieurs (8,9) sont maintenus au contact du corps d'épreuve (7) par des organes de maintien (13).

3. Capteur selon la revendication 1, **caractérisé par le fait que** les organes d'appui supérieurs et inférieurs (8,9) sont reliés au corps d'épreuve (7) par des pattes (11) flexibles.

4. Capteur selon l'une des revendications précédentes, **caractérisé par le fait que** les organes d'appui (8,9) sont susceptibles de se déplacer entre eux et par rapport au corps d'épreuve (7) dans des plans non strictement parallèles, ce qui permet d'épouser les irrégularités du sol sans influencer la mesure.

5. Capteur selon l'une des revendications précédentes, **caractérisé par le fait qu'**il comporte une jauge de contrainte fixée sur sa poutre de mesure se déformant en torsion comportant au moins deux résistances variables orthogonales disposées suivant des directions formant un angle de 45° par rapport à l'axe de la poutre de torsion du corps d'épreuve (7).

6. Capteur selon l'une des revendications précédentes, **caractérisé par le fait que** le corps d'épreuve présente vu en plan la forme générale d'un H, sa partie médiane constituant ladite poutre de mesure.

7. Capteur selon la revendication 2, **caractérisé par le fait que** les organes d'appui (8,9) sont en contact avec le corps d'épreuve (7) par l'intermédiaire d'éléments de contact tels que billes, saillies, goupilles.

8. Appareil de pesage, **caractérisé par le fait qu'**il comporte un plateau (1) et au moins trois capteurs (3) selon la revendication 1 prenant appui directement ou indirectement par leur organe d'appui supérieur (8) sous ledit plateau (1) et par leur organe d'appui inférieur (9) sur le sol ou une surface.

9. Appareil de pesage selon la revendication 8, **caractérisé par le fait que** les résistances variables des jauges de contrainte de chaque capteur sont montées en un seul pont de Wheatstone, dont la sortie alimente un affichage.
